# EUROPÄISCHE PATENTSCHRIFT

(11) **EP 2 381 228 B1**
(45) Veröffentlichungstag und Bekanntmachung des Hinweises auf die Patenterteilung: **14.08.2019**
(21) Anmeldenummer: 10004155.7
(22) Anmeldetag: 20.04.2010
(51) Int. Cl.: G01F 23/26

(54) **Messsonde mit Schutzeinrichtung gegen ein Messmedium und Verfahren zum Herstellen einer solchen Messsonde**
Measurement probe with protection device and a measurement medium and method for producing such a measurement probe
Sonde de mesure dotée d'un dispositif de protection contre un support de mesure et procédé de fabrication d'une telle sonde de mesure

(43) Veröffentlichungstag der Anmeldung: 26.10.2011
(73) Patentinhaber: VEGA Grieshaber KG, 77709 Wolfach (DE)
(72) Erfinder: Dieterle, Hermann, 77709 Wolfach (DE); Kopp, Thomas, 77709 Wolfach (DE)
(74) Vertreter: Patentanwälte Bauer Vorberg Kayser

(56) Entgegenhaltungen:
- DE-A1- 1 916 584
- DE-A1- 2 744 864
- DE-A1- 4 131 582
- DE-A1-102007 008 358
- DE-U1- 9 301 078
- US-A- 3 831 069
- US-A- 4 412 270
- US-A- 5 701 084

## Beschreibung

Die Erfindung bezieht sich auf eine Messsonde mit einer Schutzeinrichtung gegen ein Messmedium und auf ein Verfahren zum Herstellen einer solchen Messsonde.

Eine allgemein bekannte Messsonde besteht aus einem Sensorkopf, dessen vorderseitiges Prozessanschlussgewinde in eine Öffnung eines Behältnisses eingeschraubt ist, wobei sich in dem Behältnis ein Messmedium befindet. Von dem Sensorkopf ausgehend ragt durch die Öffnung ein Sensorstab in das Behältnis hinein, um Messungen des Messmediums durchzuführen. Der Sensorstab weist ausgehend vom Sensorkopf ein nach vorne hin in das Behältnis ragenden Metallstab mit Kunststoffummantelung auf. Vorderseitig am Stab ist eine Elektrode angeordnet, welche über eine Leitung in rückseitiger Richtung mit einer Messelektronik verbunden ist. Zum Schutz gegen das unter Umständen leitfähige Messmedium ist kann eine solche Messelektrode durch einen PTFE-Schlauch (PTFE: Polytetrafluorethylen) umgeben sein. Der Schlauch umgibt zusätzlich auch die rückseitig der Elektrode angeordneten Komponente wie den Isolator und das Abschirmrohr und ragt in den Sensorkopf hinein. Die Länge des Sensorstabs, über welche sich auch der Schlauch erstreckt, kann dabei mehrere Meter, insbesondere 4 Meter betragen.

Bei der Fertigung wird der Schlauch über die Komponenten des Sensorstabs geschoben, wobei fertigungstechnisch ein geringer Spalt, das heißt insbesondere Luft, zwischen einer Innenseite des Schlauchs und einer Außenseite der Elektrode und weiteren Komponenten verbleibt. Nachteilhaft kann daher ein in einem Behälter zu messendes Medium, z. B. Wasserdampf, durch den Schlauch diffundieren und sich an dem innen liegenden Abschirmrohr und an der Elektrode niederschlagen. Dies verursacht eine leitende Verbindung zwischen der Elektrode, welche im Betrieb ein heißes Teil ist, und dem Abschirmrohr als einer Masseverbindung. Diese werden durch den Niederschlag elektrisch kurzgeschlossen und erzeugen in einer nachgeschalteten Auswerteelektronik einen Störwert.

Ein Problem besteht somit insbesondere bei Anwendungen mit einem elektrisch leitfähigen Messmedium, beispielsweise Wasser bzw. Wasserdampf darin, dass durch Mikroleckagen im PTFE-Schlauch oder durch Schwankungen bei der Fertigungsqualität leitendes Medium unter den Schlauch eindringen kann und einen Kurzschluss an den Messelektroden verursachen kann. Dadurch entsteht wegen eindringender Feuchtigkeit, insbesondere Wasser, eine Störung von Messergebnissen oder sogar ein Geräteausfall.

Die US 3 831 069 A und US 4 412 270 A aus dem Stand der Technik offenbaren beide eine Messsonde mit einer Elektrode und einer die Elektrode umschließenden, als Schrumpfschlauch ausgebildeten Schutzeinrichtung.

Die Aufgabe der Erfindung besteht darin, eine Messsonde mit einer Schutzeinrichtung gegen ein Messmedium zu verbessern und ein Verfahren zum Herstellen einer solchen Messsonde vorzuschlagen. Insbesondere soll ein Eindringen des Messmediums zwischen eine Elektrode und einen die Elektrode als Schutzeinrichtung umgebenden Schlauch verhindert werden.

Diese Aufgabe wird durch eine Messsonde mit einer Schutzeinrichtung gegen ein Messmedium mit den Merkmalen des Patentanspruchs 1 bzw. durch ein Verfahren zum Herstellen einer solchen Messsonde mit den Merkmalen des Patentanspruchs 8 gelöst. Vorteilhafte Ausgestaltungen sind Gegenstand von abhängigen Ansprüchen.

Bevorzugt wird demgemäß eine Messsonde mit einer Elektrode und einer Schutzeinrichtung gegen ein Messmedium, wobei ein Schrumpfschlauch als die Schutzeinrichtung auf die Elektrode umschließend aufgeschrumpft ist.

Ein auf die Elektrode aufgeschrumpfter Schrumpfschlauch bietet eine besonders dichte Verbindung zwischen dem Material des Schrumpfschlauchs und einer außenseitigen Oberfläche der Elektrode, so dass ein verbesserter Schutz gegen ein Eindringen von Flüssigkeit oder Dampf im Vergleich zu einem Spalt eines übergezogenen Schlauches besteht. Die Verwendung eines Schrumpfschlauches um die Messelektrode verhindert, dass um die Messelektrode ein Spalt übrigbleibt, in dem insbesondere Wasserdampf zu Wasser kondensieren kann. Reduziert oder vermieden wird somit die Gefahr einer Störung von Messwerten oder gar eines Geräteausfalls wegen eindringender Feuchtigkeit bzw. des Messmediums.

Typischerweise ist in einem Sensorstab einer derartigen Messsonde die Elektrode rückseitig und vorderseitig in axialer Richtung durch andere Komponenten begrenzt. Unter einem seitlichen Aufschrumpfen des Schrumpfschlauchs auf die Elektrode wird daher insbesondere ein Aufschrumpfen des Schrumpfschlauchs in radialer Richtung bzw. über eine Oberfläche seitlich der axialen Richtung verstanden. Natürlich kann im Fall einer beispielsweise vorderseitig zum Messmedium hin nicht durch eine weitere Komponente dicht verschlossene Messelektrode auch deren vorderseitige Oberfläche durch ein solches Schrumpfschlauchmaterial abgedichtet sein.

Erfindungsgemäß sind bei einer solchen Messsonde die Elektrode mit dem Schrumpfschlauch oder die Elektrode und ein Teil rückseitig der Elektrode angeordneter Komponenten, auf welche der Schrumpfschlauch zumindest teilweise seitlich aufgeschrumpft ist, von einem Schlauch als einer seitlich außenseitigen Schutzeinrichtung umgeben sind. Besonders vorteilhaft ist somit eine Messsonde, bei welcher in für sich bekannter Art und Weise ein schützender Schlauch über die Komponenten des Sensorstabs gezogen ist, wenn bei einer derartigen Messsonde die innenliegenden Komponenten von einem Schrumpfschlauch umgeben sind und ein derartiger Schlauch außenseitig zusätzlich über die mit dem Schrumpfschlauch geschützten Komponenten gezogen wird.

Vorteilhaft ist dies insbesondere, da ein Spalt zwischen dem Schlauch und den innenliegenden Komponenten durch den dazwischen befindlichen Schrumpfschlauch reduziert wird. Dadurch wird verhindert, dass sich schädliches Kondensat an den Metallflächen der Elektrode und gegebenenfalls weiterer Komponenten niederschlägt und verteilt.

Zwischen der Elektrode und einem vorderseitig der Elektrode angeordneten Ende ist vorzugsweise ein Stopfen angeordnet, welcher seitlich außenseitig von dem Schlauch umgeben und mit dem Schlauch fest verbunden, insbesondere verschweißt ist.

Zwischen der Elektrode und dem Schrumpfschlauch ist bevorzugt zumindest ein O-Ring angeordnet ist, wobei eine außenseitige Oberfläche des O-Rings radial weiter ragt als eine außenseitige Oberfläche der Elektrode. Ein solcher O-Ring, welcher vorzugsweise möglichst nahe dem vorderseitigen Ende der Elektrode angeordnet ist, verhindert vorteilhaft, dass sich eventuelle Restmengen von leitenden Medien, welche sich in einem Raum zwischen einem vorderseitigen Stopfen und der Elektrode absetzen, weiterkriechen können. Zweckmäßig ist dabei, wenn der O-Ring teilweise in eine Umfangsnut eingesetzt ist, welche in die Oberfläche der Elektrode hineinführt.

Bei einer solchen Messsonde ist zwischen der Elektrode und einem rückseitig der Elektrode angeordneten Sensorkopf üblicherweise ein Abschirmrohr angeordnet, wobei der Schrumpfschlauch rückseitig der Elektrode bis über zumindest einen Teil des Abschirmrohrs aufgeschrumpft ist, insbesondere in den Sensorkopf hineinragt.

In axialer Richtung kann zwischen der Elektrode (2) und dem Abschirmrohr (10) zumindest eine weitere Komponente, insbesondere ein diese trennender Isolator (14) angeordnet sein, wobei der Schrumpfschlauch (3) auch auf eine Außenseite solcher weiterer Komponenten aufgeschrumpft ist. Unter der axialen Richtung wird insbesondere eine Richtung verstanden, welche vom Sensorkopf einer solchen Messsonde durch dessen Sensorstab hindurch gesehen in Richtung eines Innenraums des Behältnisses bzw. in Richtung des Messmediums gerichtet ist.

Bevorzugt wird eine solche Messsonde, wenn zwischen dem Abschirmrohr und dem dieses rückseitig zumindest teilweise umgebenden Schrumpfschlauch einerseits und andererseits einer Komponente, insbesondere einem Rohrhalter des Sensorkopfes zumindest ein O-Ring angeordnet ist, welcher in der Komponente des Sensorkopfes gegen den Schrumpfschlauch drückend eingesetzt ist.

Ein solcher O-Ring dient dazu, eventuelle Restmengen von leitenden Medien, insbesondere auch Fluiden und Gasen daran zu hindern, über eine Komponente wie einen Rohrhalter zu einer Messelektronik oder Auswerteelektronik innerhalb des Sensorkopfes durchdringen zu können. Zweckmäßig ist auch bei einem solchen O-Ring, dass dieser in einer Nut geführt ist, welche vorzugsweise innenseitig der den O-Ring aufnehmenden Komponente angeordnet ist, so dass der O-Ring einerseits Halt gegen eine axiale Verschiebung erfährt und andererseits gegen den Schrumpfschlauch drückend aus einer solchen Nut geringfügig herausragt. Insbesondere wird dadurch ein zusätzlicher vorsorglicher Schutz gegenüber Medien geboten, welche über einen Stabhalter bzw. Rohrhalter in den Sensorkopf eindringen könnten. Allgemein betrachtet dienen O-Ringe bei einer derart aufgebauten Messsonde als ein zusätzlicher Schutz zum Verhindern, dass eventuell doch noch geringe Reste eines Messmediums unter den Schlauch kriechen können.

Bevorzugt ist bei einer derartigen Messsonde ein Innendurchmesser des Schlauchs so eng bemessen ist, dass das Prozessmedium nicht zwischen den Schlauch und den Schrumpfschlauch einfließen kann.

Eine solche Messsonde weist elektrisch leitfähige Komponenten wie die Elektrode und das Abschirmrohr auf, welche somit gegenüber einem elektrisch leitfähigen und flüssigen, fluiden oder dampfförmigen Messmedium vorteilhaft durch Komponenten aus Kunststoff geschützt sind, wobei der Schrumpfschlauch aus einem Kunststoff, insbesondere Perfluor- bzw. Ethylen-Propylen-Kunststoff ausgebildet ist und ein /der den Schrumpfschlauch umgebende Schlauch aus einem Kunststoff, insbesondere Polytetrafluorethylen oder Polyethylen ausgebildet ist. Erfindungsgemäß besteht der Schrumpfschlauch somit aus einem wasserabweisenden Material mit hydrophobem Charakter oder weist solches auf.

Ein weiterer Vorteil eines aus Kunststoff ausgebildeten Schrumpfschlauchs besteht darin, dass dessen außenseitige Oberfläche einen geringeren Reibwert aufweist als die Oberflächen der von diesem umgebenen Komponenten, insbesondere der Elektrode. Dadurch lässt sich ein außenseitiger Schlauch als zusätzlicher Schutzkomponente durch den geringeren Reibwert leichter über die vom Schrumpfschlauch umgebenen Komponenten des Sensorstabs schieben, was einen geringeren Innendurchmesser des außenseitigen Schlauchs zulässt und somit einem eventuell verbleibenden Spalt zwischen der Innenseite des Schlauchs und der Außenseite des Schrumpfschlauchs weiter verringern lässt.

Eigenständig vorteilhaft ist ein Verfahren zum Herstellen einer solchen Messsonde, bei dem über zumindest die Elektrode ein Schrumpfschlauchmaterial aufgebracht und zu dem Schrumpfschlauch geschrumpft wird und nachfolgend über zumindest die Elektrode mit dem zumindest diese umgebenden Schrumpfschlauch ein abdichtender außenseitiger Schlauch gezogen wird.

Ein Ausführungsbeispiel wird nachfolgend anhand der Zeichnung näher erläutert. Es zeigt:

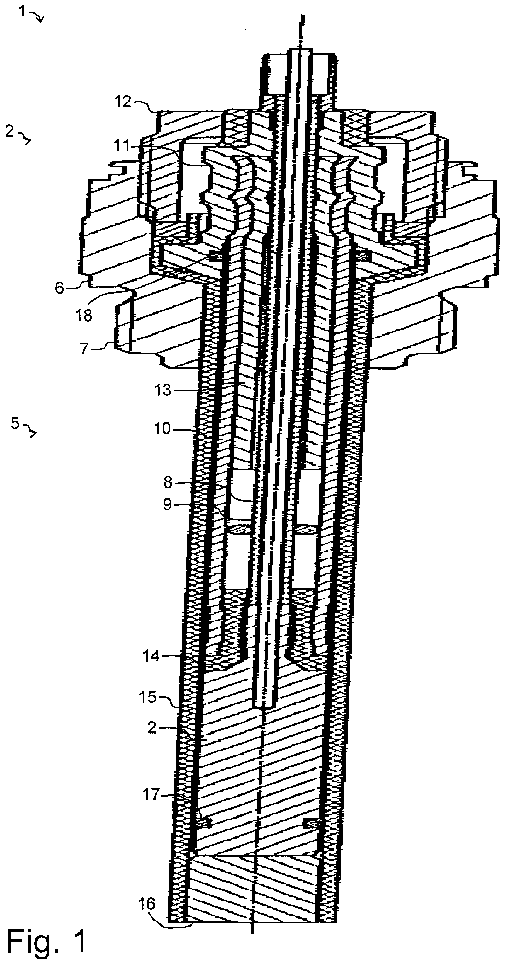

- Fig. 1: einen bevorzugten Messsensor in einer Schnittansicht, wobei die Darstellung zur Veranschaulichung der relevanten Komponenten in einer Richtung quer zur Längsachse des Messsensors stark gestreckt verzerrt skizziert ist.

Wie aus Fig. 1 ersichtlich, weist eine bevorzugte Messsonde 1 eine vorderseitige Elektrode 2 auf, auf welcher zumindest über einen Teil von deren Umfang ein Schrumpfschlauch 3 aufgeschrumpft ist. Vorzugsweise erstreckt sich der Schrumpfschlauch 3 auch über weitere Komponenten in axialer Richtung der Messsonde 1.

Eine solche Messsonde 1 besteht aus einem rückseitigen Sensorkopf 4 und aus einem in vorderseitiger Richtung aus diesem Sensorkopf 4 herausragenden Sensorstab 5. Der Sensorkopf 4 besteht bevorzugt aus einem für sich bekannten Prozessanschluss 6 als einem Gehäuseteil mit einem vorderseitigen außenseitigen Prozessanschlussgewinde 7. Über das Prozessanschlussgewinde 7 ist der gehäuseartige Prozessanschluss in eine Gewindeöffnung eines Behältnisses einschraubbar, in welchem sich ein zu messendes Messmedium befindet. Vorzugsweise ist der Prozessanschluss 6 aus Metall ausgebildet. Der Prozessanschluss 6 weist eine zentrale Durchtrittsöffnung auf, welche zum Durchführen des Sensorstabs 5 aus dem rückseitigen Abschnitt des Sensorkopfs in das Behältnis hinein dient.

Der Sensorstab 5 besteht aus einer Vielzahl einzelner Komponenten. Rückseitig führt zentral in axialer Richtung ein Leiter 8 aus einem elektrisch leitfähigen Material in den Sensorstab 5 hinein und durch diesen bis zu der relativ weit vorderseitig des Sensorstabs 5 oder vorderseitig des Sensorstabs 5 angeordneten Elektrode 2 hindurch. Der Leiter 8 dient zum Anlegen eines elektrischen Signals an die Elektrode 2, welche ebenfalls aus einem elektrisch leitfähigen Material ausgebildet ist, bzw. zum Abführen eines elektrischen Signals von der Elektrode 2 zu einer rückseitigen Auswerteelektronik. Vorzugsweise ist der Leiter 8 von einem Isolator 9, welcher insbesondere aus Kunststoff gefertigt ist, umgeben. Ein solcher Isolator 9 erstreckt sich vorzugsweise über den Leiter 8 von dessen Austrittsende aus dem Sensorkopf 4 bis zu einem Kontaktpunkt der Elektrode 2.

Erfindungsgemäß dient zur Befestigung und Abschirmung des Leiters 8 ein Abschirmrohr 10, vorzugsweise aus Metall. Das Abschirmrohr 10 erstreckt sich vom Sensorstab 5 in rückseitiger Richtung bis in den Sensorkopf hinein und weist im Bereich des Sensorkopfs 4 vorzugsweise eine strukturierte Oberfläche auf. Über die strukturierte Oberfläche des rückseitigen Abschirmrohrs 10 ist ein Eingriff in einen vorzugsweise ebenfalls aus Metall gefertigten Rohrhalter 11 möglich. Der Rohrhalter 11 ist in für sich bekannter Art und Weise mittels einer Druckschraube 12 in einem weiteren rückseitig innenseitig ausgebildeten Gewinde des Prozessanschlusses 6 eingeschraubt und fest verspannt.

Da ein typischer solcher Leiter 8 üblicherweise einen geringen Durchmesser im Vergleich zu einem Innendurchmesser eines typischen solchen Abschirmrohrs 10 aufweist, ist zwischen diesen im rückseitigen Ende des Sensorstabs 5 vorzugsweise ein weiterer Isolator 13 aus vorzugsweise Kunststoff eingesetzt, welcher sich zumindest teilweise über den Raum zwischen dem Leiter 8 und dem Abschirmrohr 10 erstreckt. Dieser weitere Isolator 13 erstreckt sich vorzugsweise jeweils ein Stück zu beiden Seiten der Durchtrittsöffnung des Prozessanschlusses 6 einen Abschnitt in den Sensorkopf 4 und einen Abschnitt in den Sensorstab 5 hinein. In vorderseitiger Richtung des Sensorstabs 5 zwischen einem solchen weiteren Isolator 13 und der vorderseitigen Elektrode 2 verbleibt zwischen dem Leiter 8 und dem diesen direkt umgebenden Isolator 9 einerseits und andererseits dem Abschirmrohr 10 vorzugsweise ein freier Raum. Gegebenenfalls sind in diesem freien Raum zwischen dem den Leiter umgebenden Isolator 9 und dem Abschirmrohr 10 Distanzhalter aus bevorzugt nicht-leitfähigem Kunststoff eingesetzt.

In einem vorderseitigen Abschnitt des Sensorstabs 5 befindet sich die Elektrode 2, welche in leitfähigem Kontakt mit dem Leiter 8 steht. Bevorzugt ragt der Leiter 8 ein Stück in eine Bohrung der Elektrode 2 hinein, um eine gute elektrische Ankopplung sicherzustellen. Außerdem erstreckt sich das Abschirmrohr 10 bis zu der Elektrode 2 hin. Zur elektrischen Trennung und mechanischen Stabilisierung ist zwischen dem vorderseitigen Abschnitt des Abschirmrohrs 10 und einem rückseitigen Abschnitt der Elektrode 2 bevorzugt ein weiterer, vorderseitiger Isolator 14 eingesetzt.

Der beispielhafte vorderseitige Isolator 14 ragt dabei in den Raum zwischen einer innenseitigen Wandung des Abschirmrohrs 10 bis zu einem Endabschnitt des den Leiter 8 umgebenden Isolators 9. Vorderseitig weist der vorderseitige Isolator 14 einen flanschartigen Vorsprung auf, welcher eine Stirnseite des Abschirmrohrs 10 überragt und in radialer Richtung vorzugsweise eine Erstreckung gleich einer radialen außenseitigen Erstreckung des Abschirmrohrs 10 und der Elektrode 2 aufweist. Dadurch besteht eine isolierende Komponente, welche sich vollständig zwischen dem Abschirmrohr 10 und der Elektrode 2 erstreckt und diese dabei einerseits stabil verbindet und andererseits elektrisch isoliert.

Bei einer Fertigung des Sensorstabs 5 werden die genannten Komponenten aneinandergefügt. Daraufhin wird ein Schrumpfschlauchmaterial auf die Elektrode 2 außenseitig aufgebracht, insbesondere übergezogen. Das Schrumpfschlauchmaterial wird erfindungsgemäß in rückseitiger Richtung auch über die weiteren Komponenten, das heißt bei der dargestellten Ausgestaltung über den flanschartigen Vorsprung des vorderseitigen Isolators 4 und über das Abschirmrohr 10 gezogen und auf diesen aufgeschrumpft.

Erfindungsgemäß erstreckt sich der Schrumpfschlauch 3 dabei bis in den Innenraum des Sensorkopfs 4, jedoch bei der beispielhaft dargestellten Ausgestaltung nicht ganz bis zum rückseitigen Ende des Abschirmrohrs 10.

Nach Herstellung dieser vom Schrumpfschlauch 3 umgebenen Komponenten wird erfindungsgemäß in für sich bekannter Art und Weise ein als Schutzeinrichtung gegen ein Prozessmedium dienender Schlauch 15 über die von dem Schrumpfschlauch 3 umgebenen Komponenten gezogen. Der Schlauch 15 ist bevorzugt ebenfalls aus Kunststoff. Dieser Schlauch 15 ist vorzugsweise so dimensioniert, dass sein Innendurchmesser gerade ausreicht, ein Überziehen über den Schrumpfschlauch 3 zu ermöglichen, so dass ein möglichst geringer Spalt zwischen der Außenseite des Schrumpfschlauchs 3 und der Innenseite des diesen umgebenden Schlauchs 15 verbleibt.

Rückseitig ragt der Schlauch 15 in den Sensorkopf hinein und ist vorzugsweise mittels der Druckschraube 12 in dem Sensorkopf 4 verspannt. Vorderseitig ragt der Schlauch 15 vorzugsweise ein Stück über eine stirnseitige Erstreckung der Elektrode 2 hinaus. Zum Schutz des vorderseitigen Endes der Elektrode 2 ist in den Schlauch 15 vorderseitig der Elektrode 2 ein Stopfen 16 aus Kunststoff, insbesondere aus demselben Material wie dem Material des Schlauchs 15, eingesetzt. Bevorzugt ist ein solcher Stopfen 16 in dem Schlauch 15 verschweißt, so dass eine gegenüber dem umgebenden Prozessmedium möglichst dichte Verbindung zwischen diesen besteht.

Für den Fall, dass doch Prozessmedium in den Raum zwischen dem Stopfen 16 und der Elektrode 2 eindringen sollte, ist ein O-Ring 17 zwischen der Elektrode 2 und dem Schrumpfschlauch 3 eingesetzt. Der O-Ring 17 aus vorzugsweise Elastomer ist dabei vorteilhaft in einer Ausnehmung, insbesondere ringförmig in einer außenseitigen Oberfläche der Elektrode 2 eingelassenen Nut so eingesetzt, dass nur ein radial außenseitiger Abschnitt des O-Rings 17 aus der Oberfläche der Elektrode 2 herausragt.

Vorteilhaft kann ein weiterer O-Ring 18 aus vorzugsweise Elastomer als zusätzliche schützende Dichtung in dem Rohrhalter 11 eingesetzt sein. Dazu weist der Rohrhalter 11 eine innenseitige Ausnehmung, insbesondere eine ringförmige Nut, auf, in welcher der weitere O-Ring 18 teilweise herausragend eingesetzt ist. Der O-Ring 18 ist dabei so positioniert, dass er außenseitig an dem in den Sensorkopf 4 hineinragenden Endabschnitt des Schrumpfschlauchs 3 abdichtend anliegt.

Eine solche Messsonde 1 weist insbesondere im Bereich von deren Sensorkopf 4 noch weitere für sich bekannte Komponenten auf, welche zur Befestigung des Sensorstabs 5 in dem Sensorkopf 4 dienen. Bei diesen weiteren Komponenten handelt es sich insbesondere um metallische Druckringe oder Kontaktbuchsen sowie um weitere Isolatoren.

### Bezugszeichenliste:

- 1: Messsonde
- 2: Elektrode
- 3: Schrumpfschlauch
- 4: Sensorkopf
- 5: Sensorstab
- 6: Prozessanschluss
- 7: Prozessanschlussgewinde
- 8: Leiter
- 9: Isolator
- 10: Abschirmrohr
- 11: Rohrhalter
- 12: Druckschraube
- 13: Isolator
- 14: vorderseitiger Isolator
- 15: Schlauch
- 16: Stopfen
- 17: O-Ring
- 18: O-Ring

## Patentansprüche

1. Messsonde (1) mit einer Elektrode (2) und einer Schutzeinrichtung gegen ein Messmedium, wobei
- ein Schrumpfschlauch (3) als die Schutzeinrichtung auf die Elektrode (2) umschließend aufgeschrumpft ist,
- zwischen der Elektrode (2) und einem rückseitig der Elektrode (2) angeordneten Sensorkopf (4) ein Abschirmrohr (10) angeordnet ist, und wobei
- der Schrumpfschlauch (3) rückseitig der Elektrode (2) bis über zumindest einen Teil des Abschirmrohrs (10) aufgeschrumpft ist,
**dadurch gekennzeichnet, dass**
- der Schrumpfschlauch aus einem wasserabweisenden Material mit hydrophobem Charakter besteht, oder ein solches aufweist, und
- der Schrumpfschlauch aus einem Kunststoff ausgebildet ist, so dass dessen außenseitige Oberfläche einen geringeren Reibwert aufweist, als die Oberfläche der von diesem umgebenen Komponenten, wobei die Elektrode (2) mit dem Schrumpfschlauch (3) oder die Elektrode und ein Teil rückseitig der Elektrode (2) angeordneter Komponenten, auf welche der Schrumpfschlauch (3) zumindest teilweise umschließend aufgeschrumpft ist, von einem Schlauch (15) als einer umschließenden außenseitigen Schutzeinrichtung umgeben sind.

2. Messsonde (1) nach Anspruch 1, bei der zwischen der Elektrode (2) und einem vorderseitig der Elektrode (2) angeordneten Ende ein Stopfen (16) angeordnet ist, welcher seitlich außenseitig von dem Schlauch (15) umgeben und mit dem Schlauch (15) fest verbunden, insbesondere verschweißt ist.

3. Messsonde (1) nach einem vorstehenden Anspruch, bei der zwischen der Elektrode (2) und dem Schrumpfschlauch (3) zumindest ein O-Ring (17) angeordnet ist, wobei eine außenseitige Oberfläche des O-Rings (17) radial weiter ragt als eine außenseitige Oberfläche der Elektrode (2).

4. Messsonde (1) nach einem der vorhergehenden Ansprüche, bei der in axialer Richtung zwischen der Elektrode (2) und dem Abschirmrohr (10) zumindest eine weitere Komponente, insbesondere ein diese trennender Isolator (14) angeordnet ist, wobei der Schrumpfschlauch (3) auch auf eine Außenseite solcher weiterer Komponenten aufgeschrumpft ist.

5. Messsonde (1) nach einem der vorhergehenden Ansprüche, bei der zwischen dem Abschirmrohr (10) und dem dieses rückseitig zumindest teilweise umgebenden Schrumpfschlauch (3) einerseits und andererseits einer Komponente des Sensorkopfes (4) zumindest ein O-Ring (18) angeordnet ist, welcher in der Komponente des Sensorkopfes (4) gegen den Schrumpfschlauch (3) drückend eingesetzt ist.

6. Messsonde (1) nach einem der vorstehenden Ansprüche, bei der ein Innendurchmesser des Schlauchs (15) so eng bemessen ist, dass das Prozessmedium nicht zwischen den Schlauch (15) und den Schrumpfschlauch (3) einfließen kann.

7. Messsonde (1) nach einem der vorstehenden Ansprüche, bei welcher der Schrumpfschlauch (3) aus einem Kunststoff, insbesondere Perfluor- bzw. Ethylen-Propylen-Kunststoff ausgebildet ist und ein /der den Schrumpfschlauch (3) umgebende Schlauch (15) aus einem Kunststoff, insbesondere Polytetrafluorethylen oder Polyethylen ausgebildet ist.

8. Verfahren zum Herstellen einer Messsonde (1) nach einem vorstehenden Anspruch, bei dem über zumindest die Elektrode (2) ein Schrumpfschlauchmaterial aufgebracht und zu dem Schrumpfschlauch (3) geschrumpft wird und nachfolgend über zumindest die Elektrode (2) mit dem zumindest diese umgebenden Schrumpfschlauch (3) ein abdichtender außenseitiger Schlauch (15) gezogen wird.

## Claims

1. A measuring probe (1) comprising an electrode (2) and a protection device against a measuring medium, wherein
- a shrink tube (3), as the protection device, is shrink-fitted in a surrounding manner onto the electrode (2),
- a shielding pipe (10) is disposed between the electrode (2) and a sensor head (4) disposed at a rear side of the electrode (2), and wherein
- the shrink tube (3), at the rear side of the electrode (2), is shrink-fitted up to over at least a part of the shielding pipe (10),
**characterized in that**
- the shrink tube is made from a water-repellent material with a hydrophobic character or includes such a material, and
- the shrink tube is formed from a plastic, so that its external surface has a lower frictional value than the surface of the components surrounded by it, wherein the electrode (2) with the shrink tube (3), or the electrode and a part of the components, which are disposed on the rear side of the electrode (2) and onto which the shrink tube (3) is shrink-fitted in an at least partially surrounding manner, are surrounded by a tube (15) as a surrounding external protection device.

2. The measuring probe (1) according to claim 1, in which a plug (16), which is laterally externally surrounded by the tube (15) and firmly connected, in particular welded, to the tube (15), is disposed between the electrode (2) and an end disposed at the front side of the electrode (2).

3. The measuring probe (1) according to any one preceding claim, in which at least one O-ring (17) is disposed between the electrode (2) and the shrink tube (3), wherein an external surface of the O-ring (17) projects farther in a radial direction than an external surface of the electrode (2).

4. The measuring probe (1) according to any one of the preceding claims, wherein, axially between the electrode (2) and the shielding tube (10), there is disposed at least one further component, in particular an insulator (14) separating them, wherein the shrink tube (3) is also shrink-fitted onto an outer face of such further components.

5. The measuring probe (1) according to any one of the preceding claims, in which at least one O-ring (18), which is inserted into the component of the sensor head (4) so as to press against the shrink tube (3), is disposed between, on the one hand, the shielding pipe (10) and the shrink tube (3) that surrounds it at least partially on the rear side and, on the other hand, the component of the sensor head (4).

6. The measuring probe (1) according to any one of the preceding claims, in which an internal diameter of the tube (15) is dimensioned to be so narrow that the process medium cannot flow between the tube (15) and the shrink tube (3).

7. The measuring probe (1) according to any one of the preceding claims, in which the shrink tube (3) is formed from a plastic, in particular from perfluoro- or ethylene-propylene plastic and a/the tube (15) surrounding the shrink tube (3) is formed from a plastic, in particular from polytetrafluoroethylene or polyethylene.

8. A method for producing a measuring probe (1) according to any one preceding claim, in which a shrink tube material is positioned over at least the electrode (2) and shrunk to form the shrink tube (3), and a sealing external tube (15) is then pulled over the at least the electrode (2) with the shrink tube (3) surrounding at least the latter.

## Revendications

1. Sonde de mesure (1) comprenant une électrode (2) et un dispositif de protection contre un milieu de mesure, dans laquelle
- une gaine thermorétractable (3) en tant que dispositif de protection est posée par rétraction sur l'électrode (2) de manière à envelopper celle-ci,
- un tube de protection (10) est disposé entre l'électrode (2) et une tête de capteur (4) agencée à l'arrière de l'électrode (2), et dans laquelle
- ladite gaine thermorétractable (3) est posée par rétraction à l'arrière de l'électrode (2) jusque sur au moins une partie du tube de protection (10),
**caractérisée par le fait que**
- la gaine thermorétractable est réalisée à partir d'un matériau hydrofuge ayant un caractère hydrophobe, ou présente un tel matériau, et
- la gaine thermorétractable est réalisée à partir d'une matière plastique de sorte que sa surface extérieure présente un coefficient de frottement inférieur à celui de la surface des composants entourés par celle-ci, l'électrode (2) avec la gaine thermorétractable (3) ou l'électrode et une partie de composants disposés à l'arrière de l'électrode (2) sur lesquels la gaine thermorétractable (3) est posée par rétraction de manière à les envelopper au moins en partie, étant entourés par un tuyau flexible (15) en tant que dispositif de protection extérieur enveloppant.

2. Sonde de mesure (1) selon la revendication 1, dans laquelle un bouchon (16) est disposé entre l'électrode (2) et une extrémité disposée à l'avant de l'électrode (2), qui est entouré latéralement à l'extérieur par ledit tuyau flexible (15) et qui est solidarisé, en particulier soudé, au tuyau flexible (15).

3. Sonde de mesure (1) selon l'une quelconque des revendications précédentes, dans laquelle au moins un joint torique (17) est disposé entre l'électrode (2) et la gaine thermorétractable (3), dans laquelle une surface extérieure du joint torique (17) est plus en saillie radiale qu'une surface extérieure de l'électrode (2).

4. Sonde de mesure (1) selon l'une quelconque des revendications précédentes, dans laquelle au moins un autre composant, en particulier un isolateur (14) séparant l'électrode (2) et le tube de protection (10), est disposé dans la direction axiale entre ces derniers, dans laquelle la gaine thermorétractable (3) est posée par rétraction également sur une face extérieure de tels autres composants.

5. Sonde de mesure (1) selon l'une quelconque des revendications précédentes, dans laquelle au moins un joint torique (18) est disposé entre le tube de protection (10) et, d'une part, la gaine thermorétractable (3) entourant celui-ci à l'arrière au moins en partie, et, d'autre part, un composant de la tête de capteur (4), joint torique qui est inséré dans le composant de la tête de capteur (4) en poussant contre la gaine thermorétractable (3).

6. Sonde de mesure (1) selon l'une quelconque des revendications précédentes, dans laquelle un diamètre intérieur du tuyau flexible (15) est dimensionné de manière tellement étroite que le milieu de processus ne peut pas s'écouler entre le tuyau flexible (15) et la gaine thermorétractable (3).

7. Sonde de mesure (1) selon l'une quelconque des revendications précédentes, dans laquelle la gaine thermorétractable (3) est réalisée à partir d'une matière plastique, en particulier de matière plastique perfluorique ou bien éthylène-propylène, et un/le tuyau flexible (15) entourant la gaine thermorétractable (3) est réalisé à partir d'une matière plastique, en particulier de polytétrafluoroéthylène ou de polyéthylène.

8. Procédé de fabrication d'une sonde de mesure (1) selon une revendication précédente, dans lequel sur au moins l'électrode (2) est appliqué un matériau de gaine thermorétractable et est rétracté pour obtenir ladite gaine thermorétractable (3), et, ensuite, un tuyau flexible (15) extérieur étanchant est enfilé sur au moins l'électrode (2) comprenant la gaine thermorétractable (3) entourant au moins celle-ci.
